# EUROPÄISCHE PATENTSCHRIFT

(11) **EP 0 866 394 B1**
(45) Veröffentlichungstag und Bekanntmachung des Hinweises auf die Patenterteilung: **25.09.2002**
(21) Anmeldenummer: 98103037.2
(22) Anmeldetag: 20.02.1998
(51) Int. Cl.: G05D 16/16, B60T 17/02

(54) **Governor für Druckluftbeschaffungsanlagen von Fahrzeugen**
Governor valve for compressed air production installations in vehicles
Régulateur pour installations de production d'air comprimé dans des véhicules

(30) Priorität: 20.03.1997 DE 19711739
(43) Veröffentlichungstag der Anmeldung: 23.09.1998
(73) Patentinhaber: KNORR-BREMSE Systeme für Nutzfahrzeuge GmbH, 80809 München (DE)
(72) Erfinder: Knaust, Holger, 85247 Arnbach (DE)

(56) Entgegenhaltungen:
- EP-A- 0 748 731
- DE-A- 3 801 198
- DE-A- 4 411 711
- DE-B- 1 078 837
- US-A- 4 292 998

## Beschreibung

Die Erfindung bezieht sich auf einen Governor für zumindest einen Kompressor, einen von diesem aufladbaren Druckluftvorratsbehälter und ein bei Erreichen einer Regeldruckhöhe im Druckluftvorratsbehälter schaltbares Zusatzgerät aufweisende Druckluftbeschaffungsanlagen von Fahrzeugen, insbesondere für Druckluftbremsanlagen von Fahrzeugen, mit einem Gehäuse, das mit einen vom Druck im Druckluftvorratsbehälter zu beaufschlagenden Ausgangsanschluß und einen einen Ausgangsdruck führenden Ausgangsanschluß aufweist, wobei der Ausgangsanschluß mit dem Zusatzgerät zu dessen Schalten verbunden ist, und mit einem im Gehäuse befindlichen kleinquerschnittigen Vorsteuerventil, welches bei Überschreiten einer Druckgrenze im Eingangs-anschluß ein ebenfalls im Gehäuse befindliches großquerschnittiges Relaisventil zum Erstellen des Ausgangsdruckes am Ausgangsanschluß pneumatisch ansteuert.

Derartige Governore liefern bei Unterschreiten einer unteren Druckgrenze der für den Druckluftvorratsbehälter vorgesehenen Regeldruckhöhe Atmosphärendruck, bei Überschreiten einer oberen Druckgrenze des Regeldruckes einen dem Druck im Vorratsluftbehälter entsprechenden Überdruck am Ausgangsanschluß; dieser am Ausgangsanschluß herrschende Ausgangsdruck wird als Schaltdruck für das Zusatzgerät genutzt. Das Zusatzgerät kann dabei ein kolbengesteuertes Auslaßventil zum Ablassen der vom Kompressor geförderten Luft zur Atmosphäre während Kompressor-Leerlaufphasen, eine Energiespareinrichtung der Druckluftbeschaffungsanlage, wie beispielsweise eine Offenhaltevorrichtung für das Kompressoreinlaßventil oder einem parallel zu diesem angeordneten, gesonderten Ventil einer Schadraumregelung für den Kompressor, eine Ansaugdrosselung im Luftansaugkanal des Kompressors, eine Abschaltkupplung im Kompressor-Drehantrieb, eine Lufttrocknungseinrichtung, insbesondere deren Regenerationsschalteinrichtung, oder dergleichen in einzelner oder kombinierter Anordnung sein. Die bekannten Governore weisen einen von einer Regelfeder entgegen dem Druck in einem Druckluftvorratsbehälter beaufschlagten Regelkolben auf, der bei eine Regeldruckhöhe erreichender Druckbeaufschlagung ein Einlaßventil zum Verbinden des Druckluftvorratsbehälters mit dem Ausgangsanschluß öffnet, bei niedrigerer Druckbeaufschlagung dagegen unter Schließen dieses Ventils ein Auslaßventil zum Verbinden des Ausgangsanschlusses mit der Atmosphäre öffnet; die beiden Ventile sind dabei zu einem Doppelventil zusammengefaßt.

Bei diesen bekannten Governor - Bauarten muß die vollständige Luftmenge, welche die Zusatzgeräte zu ihrem Schalten benötigen, durch die vom Steuerkolben schaltbaren Ventile fließen, die Ventile sollten daher großquerschnittig ausgebildet werden, was aber zu unempfindlichem und ungenauem Schaltverhalten führt; es kann somit lediglich ein unbefriedigender Kompromiß in einerseits schnellem Durchschalten der Zusatzgeräte und andererseits hinreichender Schaltgenauigkeit erzielt werden, wobei der unterschiedliche Druckluftmengenbedarf, den die Zusatzgeräte zu ihrem Schalten benötigen, weitere unerwünschte Änderungen des Schaltverhaltens bewirken können. Im Ergebnis kann sich ein unbestimmt zeitverzögertes Schaltverhalten der Zusatzgeräte bei dementsprechend unerwünscht oder sogar unzulässig überhöhten oder erniedrigten Drücken im Druckluftvorratsbehälter ergeben. Auch besteht die Gefahr, daß die Ventile vom Schaltkolben nur schleichend oder nur teilweise geöffnet werden, was zu unvollständigem Schalten der Zusatzgeräte mit entsprechend schwerwiegenden Folgen - Über- oder Unteraufladen des Druckluftvorratsbehälters, ständigem, unnötigen Druckluft- und damit Energieverlust durch nur teilgeöffnete Auslaßventile, Funktionsausfall der Lufttrocknungseinrichtungen, überhöhtem Verschleiß und Überhitzung der Abschaltkupplung und/oder schädlichen Schwingungsvorgängen im Druckluftsystem oder Kompressorantrieb - führen kann.

Aus der US-A 4 292 998 ist ein Druckreduzierventil bekannt, das inbesondere bei unter hohem Druck und Temperaturen stehenden Dampf Anwendung findet. Dieses bekannte Ventil ist mit einem Vorsteuerventil mit einem kleinen Ventilsitz und einem Hauptventil mit einem größeren Ventilsitz ausgestattet.

Aus der DE-A1-2949434 der Anmelderin ist ein gattungsfremder Druckregler für Druckluftbeschaffungsanlagen von Nutzfahrzeugen bekannt, welcher einen von einer justierbaren Regelfeder entgegen dem Druck in einem gegebenenfalls über einen Lufttrockner mit einem Druckluftvorratsbehälter zu verbindenden Ausgangsanschluß beaufschlagt. Der Regelkolben ist mit einem Ventilrohr eines Rundschieberventils gekoppelt, welches bei überwiegender Belastung des Regelkolbens durch den Druck im Ausgangsanschluß einen Beaufschlagungsraum in die Atmosphäre entlüftet, bei mangelhafter Beaufschlagung unter Absperren dieser Entlüftung mit dem Ausgangsanschluß verbindet. An den Beaufschlagungsraum grenzt ein Schaltkolben an, der bei druckbeaufschlagtem Beaufschlagungsraum ein ansonsten geschlossenes, großquerschnittiges Auslaßventil von einem mit dem Kompressor verbundenen Eingangsanschluß zur Atmosphäre öffnet. Der Regetkolben mit dem Schieberventil und der Schaltkolben mit dem Auslaßventil sind gleichachsig in einem Gehäuse angeordnet. Das Schieberventil weist einen Todhub auf, wodurch es eine Schalthysterese erhält, so daß es den Beaufschlagungsraum bei Erreichen einer oberen Druckgrenze für eine Regeldruckhöhe im Ausgangsanschluß mit der Atmosphäre, bei Unterschreiten einer unterer Druckgrenze für die Regeldruckhöhe mit dem Ausgangsanschluß verbindet.

Es ist Aufgabe der Erfindung, einen Governor der eingangs genannten Art in einfacher Weise derart auszubilden, daß unabhängig vom Schaltluftbedarf des oder der Zusatzgeräte dieses bzw. diese funktionssicher stets genau und vollständig beim richtigen Druckzustand in der Druckluftbeschaffungsanlage geschaltet wird bzw. werden.

Diese Aufgabe wird, entsprechend den im kennzeichnenden Teil des Anspruchs 1 angegebenen Merkmale gelöst durch einen Governor, wobei im Gehäuse ein dem Vorsteuerventil zugehörender Regelkolben vorhanden ist, der vom Druck im Eingangsanschluß entgegen einer Kraft belastet ist und der mit einem Schaltglied eines zwei Schaltstellungen aufweisenden Schieberventils gekoppelt ist, dass das Schieberventil in seiner einen, sich bei überwiegender Belastung des Regelkolbens durch den Druck im Eingangsanschluß einstellenden Schaltstellung einen Beaufschlagungsraum für einen im Gehäuse befindlichen, dem Relaisventil zugehörenden Schaltkolben mit dem Eingangsanschluß, in seiner anderen Schaltstellung unter Absperrung vom Eingangsanschluß mit der Atmosphäre verbindet, dass der Schaltkolben ein Doppelventil) schaltet, welches beim Atmosphärendruck im Beaufschlagungsraum den Ausgangsanschluß des Gehäuses mit der Atmosphäre, bei Druck beaufschlagtem Beaufschlagungsraum) unter Absperren der Atmosphärenverbindung mit dem Eingangsanschluß verbindet und dass das Doppelventil einen größeren Durchströmungsquerschnitt als das Schieberventil) aufweist.

Für einen derartigen, nach der Erfindung ausgebildeten Governor sind in den Unteransprüchen nach der Erfindung weitere, vorteilhafte Ausbildungsmöglichkeiten aufgezeigt.

Bevorzugte Ausführungsformen der Erfindung werden nachfolgend unter Bezugnahme auf die beigefügte Zeichnung erläutert. Es zeigen:
- Fig. 1: einen Schnitt durch den Governor eines Kompressors und
- Fig. 2: einen Schnitt durch den Governor eines Lufttrockners.

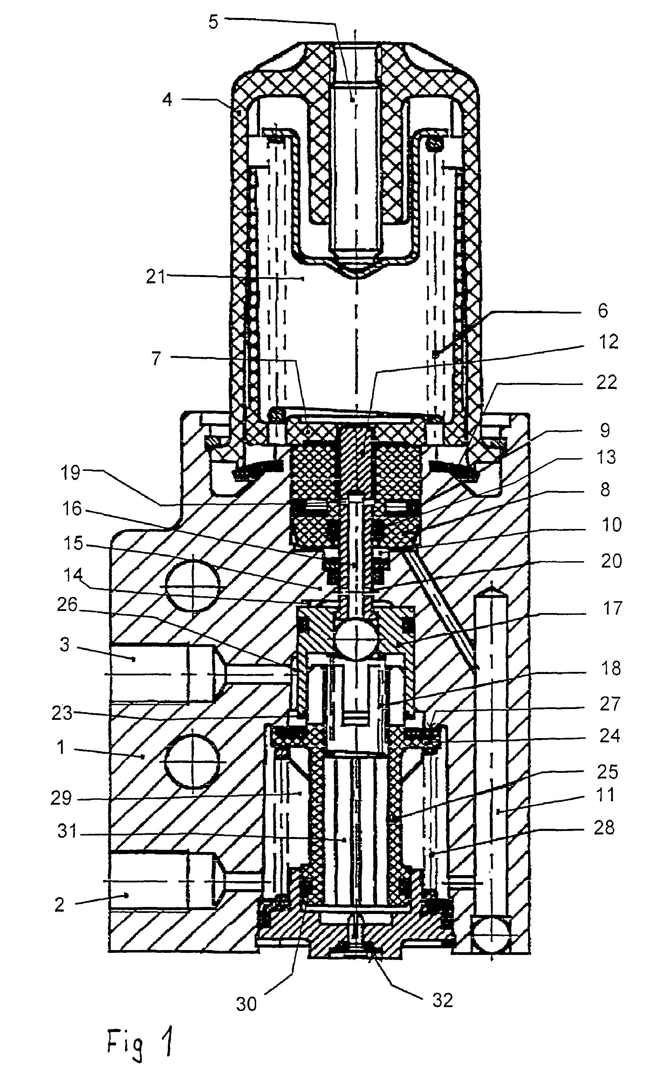

Der an einen Kompressor anbaubare Governor gemäß Fig. 1 weist ein Gehäuse 1 mit einem Eingangsanschluß 2 und einem Ausgangsanschluß 3 auf; an den Eingangsanschluß 2 ist ein nicht dargestellter, einer Druckluftanlage zugehörender Druckluftvorratsbehälter, der von einem Kompressor aufladbar ist, oder dergleichen, beispielsweise der Kompressor selbst, und an den Ausgangsanschluß 3 ein ebenfalls nicht dargestelltes Zusatzgerät, beispielsweise der vorstehend bereits erwähnten Art, insbesondere mit einem Schalteingang anzuschließen. Am Gehäuse 1 ist ein topfartiges Deckelteil 4 gehaltert, in welchem sich eine vermittels einer Verschraubung 5 in ihrer Vorspannung justierbare Regelfeder 6 befindet.

Die Regelfeder 6 stützt sich auf einen ebenfalls topfartigen, im Deckelteil 4 verschieblich geführten Federteller 7 ab, der auf einem Regelkolben 8 aufliegt und in Regelfederbelastungsrichtung am Gehäuse 1 abfangbar ist. Der Regelkolben 8 ist vermittels einer Dichtung 9 abgedichtet verschieblich in einer entsprechenden Bohrung des Gehäuses 1 geführt und begrenzt regelfederabgewandt einen Raum 10, der über Gehäusebohrungen 11 mit dem Eingangsanschluß 2 in Verbindung steht. In zentrale Bohrungen des somit als Ringkolben ausgebildeten Regelkolbens 8 und des Federtellers 7 greift axial verschieblich ein Ventilrohr 12 ein, im Regelkolben 8 befindet sich in einer Innenringnut eine gegen das Ventilrohr 12 verschieblich dichtende O-Ringdichtung 13. Das Ventilrohr 12 durchragt den Raum 10 und abgedichtet verschieblich eine diesen von einem Beaufschlagungsraum 14 trennende Gehäusewand 15 und ist unter Abdichtung seines Innenraumes 16 mit einem den Beaufschlagungsraum 14 gegenüberliegend zur Gehäusewand 15 begrenzenden Schaltkolben 17 verbunden. Unterhalb des Schaltkolbens 17 befindet sich in einem gewissen Abstand ein nicht näher bezeichneter Anschlag, der die Abwärtsbewegung des Schaltkolbens 17 begrenzt. Eine Feder 18 belastet den Schaltkolben 17 in Richtung zum Beaufschlagungsraum 14. In den Innenraum 16 des Ventilrohres 12 münden zueinander axial versetzt zwei Querbohrungen 19 und 20 ein, deren eine Querbohrung 19 von der O-Ringdichtung 13 überschleifbar ist und je nach Hubstellung des Schaltkolbens 17 und des Regelkolbens 8 in später noch näher zu erläuternder Weise oberhalb oder unterhalb der O-Ringdichtung 13, also in den die Regelfeder 6 aufnehmenden Raum 21 oder den Raum 10, und deren andere Querbohrung 20 ständig in den Beaufschlagungsraum 14 mündet. Vermittels der Querbohrung 19 bildet also das Ventilrohr 12 mit der O-Ringdichtung 13 ein Rundschieberventil 12, 13, welches seinerseits zusammen mit dem Regelkolben 8 und der Regelfeder 6 ein Vorsteuerventil bildet.

Der Raum 21 steht über eine rückschlagventilartig wirkende, das Eindringen von Verschmutzungen verhindernde und an ihrem Innenrand am Gehäuse 1 gehalterte Ringmembrane 22 und über die luftundichte Halterung des Deckelteiles 4 am Gehäuse 1 mit der Atmosphäre in Verbindung.

Der Schaltkolben 17 ist an seiner dem Beaufschlagungsraum 14 abgewandten Seite topfartig ausgebildet und endet mit einem ringförmigen Ventilsitz 23, dem eine an einem Rohrkörper 25 gehalterte Doppelventildichtung 24 gegenübersteht. Der Raum 26 außerhalb des Ventilsitzes 23 steht mit dem Ausgangsanschluß 3 in Verbindung und der Doppelventildichtung 24 steht radial außerhalb des Ventilsitzes 23 ein gehäusefester Ventilsitz 27 gegenüber. Eine im den Ventilsitz 23 umgebenden Raum 29 befindliche Feder 28 belastet die Doppelventildichtung 24 in Richtung zu den Ventilsitzen 23 und 27. Die beiden Ventilsitze 23 und 27 sowie die Doppelventildichtung 24 stellen also Ventilteile eines Doppelventils 23, 24, 27 dar, wobei dessen Durchströmungsquerschnitt wesentlich größer als derjenige des vorstehend beschriebenen Rundschieberventils 12,13 ist. Die Feder 28 befindet sich in dem auch den Rohrkörper 25 umgebenden Raum 29, der mit dem Eingangsanschluß 2 verbunden ist. Am der Doppelventildichtung 24 abgewandten Ende trägt der Rohrkörper 25 eine kolbenartige Dichtung 30 zum Gehäuse 1, deren Durchmesser etwa demjenigen des Ventilsitzes 23 entspricht und welche somit der pneumatischen Entlastung des Doppelventils 23,24,27 dient. Das Doppelventil 23,24,27 bildet zusammen mit dem Schaltkolben 17 ein Relaisventil. Der Innenraum 31 des Rohrkörpers 25 steht einerseits mit dem vom Ventilsitz 23 umschlossenen Raum und andererseits über eine Membranentlüftungsventil 32 mit der Atmosphäre in Verbindung.

Bei drucklosem oder unterhalb einer unteren Druckgrenze einer Regeldruckhöhe liegendem Druck am Eingangsanschluß 2 nehmen die Teile des Governors die aus der Zeichnung ersichtlichen Lagen ein: Die Doppelventildichtung 24 liegt unter der Kraft der Feder 28 am Ventilsitz 27 an und die Feder 18 hält den Schaltkolben 17 in dessen oberer Stellung, während die Regelfeder den Regelkolben 8 in dessen unterer, am Gehäuse 1 abgefangener Stellung hält. Der Beaufschlagungsraum 14 ist dabei durch die Querbohrung 20, den Innenraum 16, die sich in einem bestimmten Abstand oberhalb der O-Ringdichtung 13 befindende Querbohrung 19, den Raum 21 und über die Ringmembrane 22 in die Atmosphäre entlüftet. Der bestimmte Abstand ist dabei größer als der vorerwähnte Abstand des Schaltkolbens 17 zu dem unter ihm befindlichen Anschlag. Der Ausgangsanschluß 3 ist durch den Raum 26, den offenen Ringspalt zwischen dem Ventilsitz 23 und der Doppelventildichtung 24, den Raum 31 und das Membranentlüftungsventil 32 ebenfalls in die Atmosphäre entlüftet. Im Raum 28 und durch die Bohrungen 11 im Raum 10 herrschen der am Eingangsanschluß anstehende Druck.

Der am Ausgangsanschluß 3 anstehende Atmosphärendruck hält das Zusatzgerät in der jeweilig zugeordneten Schaltstellung, beispielsweise den Kompressor auf Druckluftförderung geschaltet, wodurch der Druck am Eingangsanschluß 2 ansteigt. Sobald der Druck am Eingangsanschluß 2 eine obere Druckgrenze der Regeldruckhöhe, die um eine bestimmte Differenzdruckhöhe über der vorerwähnten, unteren Druckgrenze liegt, überschreitet, reicht dieser auch im Raum 10 herrschende Druck aus, den Regelkolben entgegen der Vorspannung der Regelfeder 6 so weit anzuheben, daß die O-Ringdichtung 13 die Querbohrung 19 überschleift. Der Beaufschlagungsraum 14 wird hierdurch von der Entlüftung zur Atmosphäre abgetrennt und ebenfalls mit dem im Raum 10 herrschenden Druck des Eingangsanschlusses 2 beaufschlagt, wodurch sich der Schaltkolben 17 unter Aufsetzen des Ventilsitzes 23 auf die Doppelventildichtung 24 und deren Mitnahme unter deren Absenken vom Ventilsitz 27 abwärts bewegt; der vorerwähnte, nicht näher beschriebener Anschlag begrenzt dabei die Abwärtsbewegung des Schaltkolbens 17. Der Schaltkolben 17 nimmt hierbei das Ventilrohr 12 nach unten mit, wodurch sich der Vertikalabstand zwischen der O-Ringdichtung 13 und der sich unterhalb dieser befindenden Querbohrung 19 vergrößert und sich ein Todhub für das Rückschalten des Schieberventils 12,13 ergibt. Das Umschalten des Doppelventils 23, 24, 27 trennt den Raum 26 mit dem Ausgangsanschluß 3 von der Entlüftung durch das Membranentlüftungsventil 32 ab und druckbeaufschlagt beide, insbesondere den Ausgangsanschluß 3, durch einen großen Durchströmungsquerschnitt aus dem Raum 29 und dem Eingangsanschluß 2. Im Ausgangsanschluß 3 erfolgt daher, auch bei relativ hohem Druckluftverbrauch an diesem, der beispielsweise durch eine lange und voluminöse, angeschlossene Steuerleitung und/oder hohen Schalt-Druckluftbedarf des angeschlossenen Zusatzgerätes bedingt sein kann, ein rascher und kräftiger Druckanstieg bis zur oberen Druckgrenze, wodurch das Zusatzgerät rasch und vollständig schaltet. Gemäß dem gewählten Beispiel unterbricht das Zusatzgerät bei seinem Schalten die Druckluftförderung des Kompressors in geeigneter, möglichst energiesparender Weise, so daß der Druck am Eingangsanschluß 2 nicht weiter ansteigt, vielmehr durch Druckluftverbrauch anderer Geräte absinkt.

Sobald der am Eingangsanschluß anstehende Druck die untere Druckgrenze der Regeldruckhöhe unterschreitet, ist der Regelkolben 8 durch die Kraft der Regelfeder 6 so weit nach unten bewegt worden, daß die O-Ringdichtung 13 die Querbohrung 19 wieder nach unten überschleift, wodurch in Umkehrung zum vorbeschriebenen Vorgang der Beaufschlagungsraum 14 vom Eingangsanschluß 2 abgetrennt und in die Atmosphäre entlüftet wird. Da die Querbohrung 19 sich um den vorerwähnten Todhub tiefer als beim zuvor beschriebenen, aufwärts gerichteten Überschleifvorgang befindet, ist der unter dem Regelkolben 8 anstehende Druck bei diesem abwärts gerichteten Überschleifvorgang um einen entsprechenden Differenzdruck niedriger als beim zuvor beschriebenen Überschleifvorgang. Der noch unter dem Schaltkolben 17 anstehende Druck des Eingangsanschlusses hebt unterstützt durch die Kraft er Feder 18 den Schaltkolben in die dargestellte Lage an, wobei unter der Kraft der Feder 28 die Doppelventildichtung 24 bis zur Anlage am Ventilsitz 27 folgt und sodann der Ventilsitz 23 sich von ihr abhebt. Damit werden der Raum 26 und der Ausgangsanschluß 3 vom Eingangsanschluß 2 abgetrennt und großquerschnittig durch das Membranentlüftungsventil 32 in die Atmosphäre entlüftet, so daß im Ausgangsanschluß 3 und am Steuereingang des an mit diesem verbundenen Zusatzgerätes ein rascher und vollständiger Druckabfall erfolgt, welcher das Zusatzgerät zum raschen und vollständigen Rückschalten - beispielsweise zur Druckluftförderung des Kompressors - veranlaßt.

Es ist für die Fertigung und den Raumbedarf des Governors günstig, wenn dieser möglichst einachsig aufgebaut ist. So sind der Regelkolben 8 mit dem Rundschieberventil 12,13, der Schaltkolben 17 und das Doppelventil 23,24,27 sowie die Federn 18 und 28 gleichachsig im Gehäuse 1 angeordnet.

Es ist hervorzuheben, daß das Rundschieberventil 12,13 kleinquerschnittig und weitgehend pneumatisch entlastet sein kann, wodurch es vom Regelkolben 8 leicht schaltbar ist, so daß es sehr genau bei den erwähnten Drücken schaltet; diese Drücke sind durch Justieren der Vorspannung der Regelfeder 6 vermittels der Verschraubung 5 einstellbar. Das Rundschieberventil 12,13 stellt zusammen mit dem Regelkolben 8 das bereits erwähnte, genau arbeitendes Vorsteuerventil dar, welches das ebenfalls bereits erwähnte, den Schaltkolben 17 und das von diesem schaltbare Doppelventil 23,24,27 umfassende Relaisventil steuert. Durch das Bemessen der Abstände der Querbohrung 19 zur O-Ringdichtung 13 und des Schaltkolbens 17 zu seinem Anschlag bei drucklosem Governor ist eine Schalthysterese zwischen dem oberen und dem unteren Grenzwert der Regeldruckhöhe, also dem Ein- und Ausschalten des Zusatzgerätes, bestimmt, welche genau eingehalten wird; hierdurch wird ein unzuträglich oftmaliges Schalten vermieden. Das großquerschnittige Doppelventil 23,24,27 gewährleistet ein rasches und vollständiges Schalten des Zusatzgerätes, unabhängig vom hierzu erforderlichen Druckluftbedarf und ohne Beeinträchtigung der Schaltgenauigkeit des Governors. Weiterhin wirkt das Doppelventil 23,24,27 nachspeisend, bei Druckluftverlust am Ausgangsanschluß 3 durch Undichtigkeiten des an ihm angeschlossenen Zusatzgerätes bzw. der Steuerleitung zu diesem wird durch Nachspeisen von Druckluft aus dem Eingangsanschluß 2 der Druck unvermindert aufrechterhalten.

Selbstverständlich ist es möglich, an den Ausgangsanschluß 3 anstelle eines mehrere Zusatzgeräte, beispielsweise der eingangs erwähnten Art, anzuschließen. Des weiteren sind bauliche Abwandlungen des Governors möglich, beispielsweise kann das Rundschieberventil 12,13 durch eine andere Ventilbauart, beispielsweise ein kleinquerschnittiges Hub-Doppelventil ersetzt werden. Umgekehrt kann das Doppelventil 23,24,27 durch ein Schieberventil oder eine andere Ventilbauart ersetzt werden. Auch können die Anordnungen der Ventilsitze und der Ventildichtungen des Doppelventils vertauscht werden, wobei sich dann an den Stellen der Ventilsitze 23 und 27 Ventildichtungen befinden. Die Feder 18 ist im Ausführungsbeispiel wesentlich schwächer als die Feder 28 gewählt, diese Federn können anders abgestimmt werden und bezüglich des Schaltkolbens 17 sich in Serien- oder Parallelanordnung befinden. Im Ausführungsbeispiel ist der Schaltkolben 17 vermittels des mechanisch mit ihm verbundenen Ventilrohres 12 mechanisch mit dem das Rundschieberventil 12,13 beinhaltenden Vorsteuerventil gekoppelt; anstelle dieser mechanischen Koppelung kann auch eine pneumatische Koppelung vorgesehen werden.

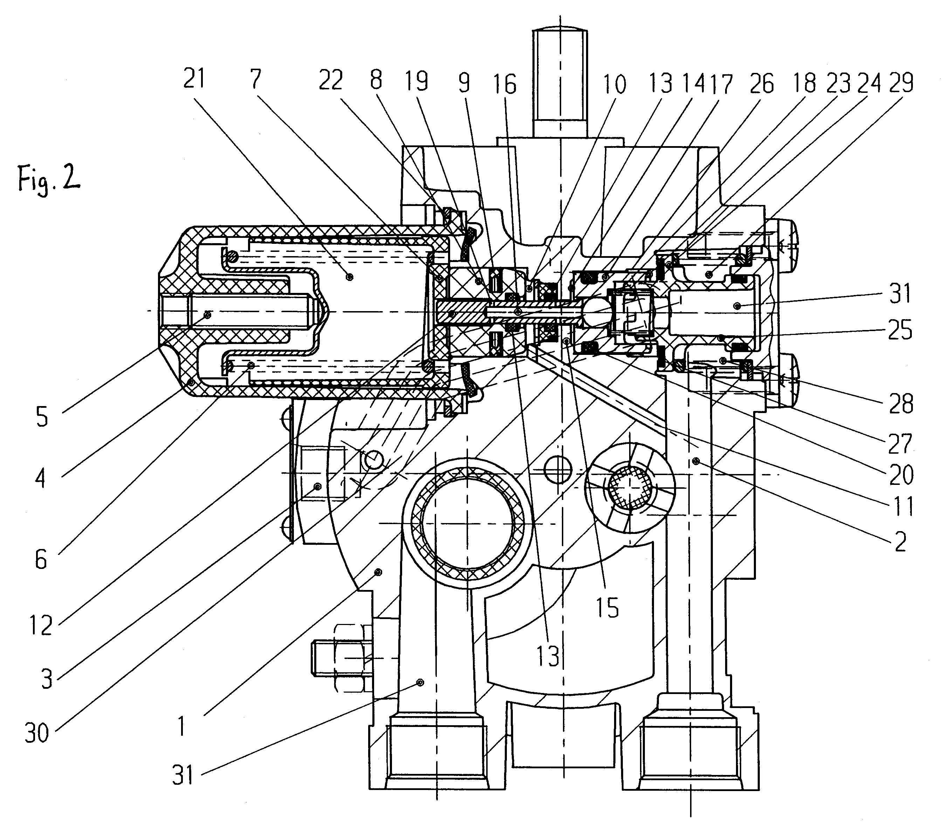

Schließlich ist es möglich, den Governor baulich mit anderen Geräten zu kombinieren bzw. in diese zu integrieren. So zeigt Fig. 2 einen in das Gehäuse 1 eines Lufttrockners integrierten Governor. In seiner Funktion und im grundsätzlichen Aufbau stimmt er mit dem für einen Kompressor wie vorstehend beschriebenen Governor überein. Der Eingangsanschluß 2 des Governors stellt dabei einen Ausgang des Lufttrockners dar. Als weiterer Unterschied steht der Raum 26 mittels einer Kanalführung 30 mit dem Ausgangsanschluß 3 in Verbindung. Zur Entlüftung ist der Raum 21 permanent mit der Atmosphäre verbunden.

### Bezugszeichenliste

| | | | |
|---|---|---|---|
| 1 | Gehäuse | 2 | Eingangsanschluß |
| 3 | Ausgangsanschluß | 4 | Deckelteil |
| 5 | Verschraubung | 6 | Regelfeder |
| 7 | Federteller | 8 | Regelkolben |
| 9 | Dichtung | 10 | Raum |
| 11 | Gehäusebohrungen | 12 | Ventilrohr |
| 13 | O-Ringdichtung | 14 | Beaufschlagungsraum |
| 15 | Gehäusewand | 16 | Innenraum |
| 17 | Schaltkolben | 18 | Feder |
| 19 | Querbohrung | 20 | Querbohrung |
| 21 | Raum | 22 | Ringmembrane |
| 23 | Ventilsitz | 24 | Doppelventildichtung |
| 25 | Rohrkörper | 26 | Raum |
| 27 | Ventilsitz | 28 | Feder |
| 29 | Raum | 30 | Dichtung |
| 31 | Innenraum | 32 | Membranentlüftungsventil |
| 12,13 | Rundschieberventil | 23,24,27 | Doppelventil |

## Patentansprüche

1. Governor für zumindest einen Kompressor, einen von diesem aufladbaren Druckluftvorratsbehälter und ein bei Erreichen einer Regeldruckhöhe im Druckluftvorratsbehälter schaltbares Zusatzgerät aufweisende Druckluftbeschaffungsanlagen von Fahrzeugen, insbesondere für Druckluftbremsanlagen von Fahrzeugen, mit einem Gehäuse (1), das mit einen vom Druck im Druckluftvorratsbehälter zu beaufschlagenden Eingangsanschluß (2) und einen einen Ausgangsdruck führenden Ausgangsanschluß (3) aufweist, wobei der Ausgangsanschluß (3) mit dem Zusatzgerät zu dessen Schalten verbunden ist, und mit einem im Gehäuse (1) befindlichen kleinquerschnittigen Vorsteuerventil (12, 13, 8, 6), welches bei Überschreiten einer Druckgrenze im Eingangsanschluß (2) ein ebenfalls im Gehäuse befindliches großquerschnittiges Relaisventil (23, 24, 27, 17) zum Erstellen des Ausgangsdruckes am Ausgangsanschluß (3) pneumatisch ansteuert,
**dadurch gekennzeichnet,**
**dass** im Gehäuse (1) ein dem Vorsteuerventil (12, 13, 8, 6) zugehörender Regelkolben (8) vorhanden ist, der vom Druck im Eingangsanschluß (2) entgegen einer Kraft belastet ist und der mit einem Schaltglied eines zwei Schaltstellungen aufweisenden Schieberventils (12, 13) gekoppelt ist,
**dass** das Schieberventil (12, 13) in seiner einen, sich bei überwiegender Belastung des Regelkolbens (8) durch den Druck im Eingangsanschluß (2) einstellenden Schaltstellung einen Beaufschlagungsraum (14) für einen im Gehäuse (1) befindlichen, dem Relaisventil (23, 24, 27, 17) zugehörenden Schaltkolben (17) mit dem Eingangsanschluß (2), in seiner anderen Schaltstellung unter Absperrung vom Eingangsanschluß (2) mit der Atmosphäre verbindet,
**dass** der Schaltkolben (17) ein Doppelventil (23, 24, 27) schaltet, welches beim Atmosphärendruck im Beaufschlagungsraum (14) den Ausgangsanschluß (3) des Gehäuses (1) mit der Atmosphäre, bei Druck beaufschlagtem Beaufschlagungsraum (14) unter Absperren der Atmosphärenverbindung mit dem Eingangsanschluß (2) verbindet und
**dass** das Doppelventil (23, 24, 27) einen größeren Durchströmungsquerschnitt als das Schieberventil (12, 13) aufweist.

2. Governor nach Anspruch 1,
**dadurch gekennzeichnet,**
**dass** das Schieberventil (12, 13) zwei Schaltstellungen mit zwischengeordnetem Todhub aufweist.

3. Governor nach Anspruch 1 oder 2,
**dadurch gekennzeichnet,**
**dass** die Kraft, mit der der Regelkolben (8) belastet ist, von einer Regelfeder (6) ausgeübt wird.

4. Governor nach Anspruch 3,
**dadurch gekennzeichnet,**
**dass** der Regelkolben (8) und der Schaltkolben (17) zueinander gleichachsig im Gehäuse (1) angeordnet sind, dass sich die Regelfeder (6) in einem atmosphärendruckbeaufschlagten Raum (21) sowie auf der dem Schaltkolben (17) abgewandeten Seite des Regelkolbens (8) befindet, dass der Beaufschlagungsraum (14) an die dem Regelkolben (8) zugewandte Seite des Schaltkolbens (17) angrenzt und dass der Schaltkolben (17) mit einem zweiten Schaltglied gekoppelt ist, welches zusammen mit dem ersten Schaltglied das Schieberventil (12, 13) bildet.

5. Governor nach Anspruch 4,
**dadurch gekennzeichnet,**
**dass** das Schieberventil (12, 13) als Rundschieberventil ausgebildet ist, wobei der Schaltkolben (17) seitens des Regelkolbens (8) mit einem Ventilrohr (12) gekoppelt ist, welches den Beaufschlagungsraum (14) durchragt und innerhalb dieses Beaufschlagungsraumes (14) eine mit seinem Innenraum (16) kommunizierende Querbohrung (20) aufweist, abgedichtet verschieblich eine den Beaufschlagungsraum (14) von einem mit dem Druck im Eingangsanschluß (2) beaufschlagten, vom Regelkolben (8) begrenzten Raum (10) trennende Gehäusewand (15) durchsetzt und in eine zentrale Bohrung des als Ringkolben ausgebildeten Regelkolbens (8) eingreift, wobei der Regelkolben (8) in seiner Bohrung eine zum Ventilrohr (12) dichtende Dichtung (O-Ringdichtung 13) und das Ventilrohr (12) im Bereich des Regelkolbens (8) eine zweite, mit seinem Innenraum (16) kommunzierende Querbohrung (19) aufweist, die von der Dichtung (O-Ringdichtung 13) überschleifbar ist.

6. Governor nach Anspruch 5,
**dadurch gekennzeichnet,**
**dass** der Schaltkolben (17) in einem regelkolbenabgewandt befindlichen, mit dem Ausgangsanschluß (3) verbundenen Raum (26) ein erstes Ventilteil (23) des als Sitzventil ausgebildeten Doppelventils (23, 24, 27) trägt, welches mit Abstand von einem zweiten, gehäusefesten Ventilteil (27) des Doppelventils (23, 24, 27) umgeben ist, und dass beiden Ventilteilen (23, 27) ein drittes, mit diesen zusammenwirkendes, ringartiges Ventilteil (24) des Doppelventils (23, 24, 27) schaltkolbenabgewandt gegenübersteht, welches in Richtung zu den beiden erstgenannten Ventilteilen (23, 27) von einer Feder (28) belastest ist und welches sich an einem schaltkolbenabgewandt erstreckenden, in einem mit dem Eingangsanschluß (2) verbundenen Raum (28) befindlichen, zum Gehäuse (1) abgedichtet verschieblichen und zum Schaltkolben (17) gleichachsigen Rohrkörper (25) befindet, dessen Innenraum (31) mit der Atmosphäre in Verbindung steht und dessen Dichtungsdurchmesser zum Gehäuse (1) etwa dem Durchmesser des ersten Ventilteiles (23) entspricht.

7. Governor nach Anspruch 6,
**dadurch gekennzeichnet,**
**dass** das erste und das zweite Ventilteil (23, 27) als Ventilsitze und das dritte Ventilteil (24) als Doppelventildichtung ausgebildet sind.

8. Governor nach Anspruch 4, 5 oder 6,
**dadurch gekennzeichnet,**
**dass** der Schaltkolben (17) beaufschlagungsraumabgewandt von einer Feder (18) belastet ist.

## Claims

1. Governor for vehicle compressed-air supply systems, having at least one compressor, a compressed-air reservoir, which can be charged by the latter, and an auxiliary implement switchable upon reaching a control pressure level in the compressed-air reservoir, in particular for compressed-air brake systems in vehicles, with a housing (1), which comprises an inlet connection (2), which is to be subjected to the pressure in the compressed-air reservoir, and an outlet connection (3), which carries an outlet pressure, wherein the outlet connection (3) is connected to the auxiliary implement for switching the latter, and with a pilot valve (12, 13, 8, 6) of a small cross section which is located in the housing (1) and which, when the pressure in the inlet connection (2) exceeds a pressure limit, pneumatically triggers a relay valve (23, 24, 27, 17), likewise located in the housing, to generate the outlet pressure at the outlet connection (3),
**characterised in that**:
a control piston (8), which belongs to the pilot valve (12, 13, 8, 6), is provided in the housing (1), which piston is loaded by the pressure in the inlet connection (2) against a force and which is coupled to a switching member of a slide valve (12, 13) having two switched positions,
when in one of its switched positions, which results when the control piston (8) is predominantly loaded by the pressure in the inlet connection (2), the slide valve (12, 13) connects a pressurising chamber (14) for a switching piston (17), which is located in the housing (1) and belongs to the relay valve (23, 24, 27, 17), to the inlet connection (2) and, when in its other switched position, to the atmosphere while shutting off the inlet connection (2),
the switching piston (17) switches a double valve (23, 24, 27) which, when the pressure in the pressurising space (14) is at atmospheric, connects the outlet connection (3) of the housing (1) to the atmosphere and, when the pressurising space (14) is pressurised, to the inlet connection (2) while shutting off the atmospheric connection, and
the double valve (23, 24, 27) has a larger flow cross section than the slide valve (12, 13).

2. Governor according to Claim 1,
**characterised in that**
the slide valve (12, 13) has two switched positions with an intervening idle stroke.

3. Governor according to Claim 1 or 2,
**characterised in that**
the force with which the control piston (8) is loaded is exerted by a control spring (6).

4. Governor according to Claim 3,
**characterised in that**
the control piston (8) and the switching piston (17) are disposed coaxially in the housing (1), that the control spring (6) is located in a space (21) which is subjected to atmospheric pressure and on the side of the control piston (8) which is away from the switching piston (17), that the pressurising space (14) adjoins the side of the switching piston (17) which faces the control piston (8), and that the switching piston (17) is coupled to a second switching member which, together with the first switching member, forms the slide valve (12, 13).

5. Governor according to Claim 4,
**characterised in that**
the slide valve (12, 13) is formed as a tubular slide valve, wherein the switching piston (17) is coupled on the side of the control piston (8) to a valve pipe (12) which projects through the pressurising space (14) and, inside this pressurising space (14), comprises a cross bore (20) communicating with its interior space (16), passes in a sealed and displaceable manner through a housing wall (15), which separates the pressurising space (14) from a space (10) subjected to the pressure in the inlet connection (2) and bounded by the control piston (8), and engages in a central bore in the control piston (8), which is formed as an annular piston, wherein the control piston (8) comprises in its bore a seal (O-ring seal 13) sealing off the valve pipe (12), and the valve pipe (12) comprises in the region of the control piston (8) a second cross bore (19) which communicates with its interior space (16) and over which the seal (O-ring 13) can slide.

6. Governor according to Claim 5,
**characterised in that**
in a space (26) which is distant from the control piston and connected to the outlet connection (3), the switching piston (17) bears a first valve part (23) of the double valve (23, 24, 27), which is formed as a seat valve and which is surrounded at a spacing by a second valve part (27), which is rigid with the housing, of the double valve (23, 24, 27), and that a third, ring-like valve part (24) of the double valve (23, 24, 27) is disposed opposite both valve parts (23, 27) facing away from the switching piston, which part (24) co-operates with the two parts (23, 27), is loaded by a spring (28) in the direction of the two first-mentioned valve parts (23, 27) and is located at a tubular body (25) which extends away from the switching piston, is located in a space (28) connected to the inlet connection (2), is displaceable in sealed fashion with respect to the housing (1), is coaxial with the switching piston (17) and the interior space (31) of which is connected to the atmosphere and the sealing diameter of which with respect to the housing (1) corresponds approximately to the diameter of the first valve part (23).

7. Governor according to Claim 6,
**characterised in that**
the first and the second valve parts (23, 27) are formed as valve seats, and the third valve part (24) is formed as a double valve seal.

8. Governor according to Claim 4, 5 or 6,
**characterised in that**
the switching piston (17) is loaded by a spring (18) at a distance from the pressurising space.

## Revendications

1. Régulateur pour installations de production d'air comprimé de véhicules, comportant au moins un compresseur, un réservoir d'air comprimé pouvant être chargé par ce dernier et un appareil supplémentaire pouvant être branché lorsque est atteint un niveau de pression de régulation dans le réservoir d'air comprimé, notamment pour des systèmes de freinage à air comprimé de véhicules, comportant un boîtier (1) qui comprend un raccordement (2) d'entrée pouvant être alimenté en la pression dans le réservoir d'air comprimé et un raccordement (3) de sortie guidant une pression de sortie, le raccordement (3) de sortie communiquant avec l'appareil supplémentaire pour son branchement, et comportant une valve (12, 13, 8, 6) de précommande de petite section transversale qui se trouve dans le boîtier (1) et qui, lorsqu'une limite de pression dans le raccordement (2) d'entrée est franchie, commande de manière pneumatique une valve (23, 24, 27, 17) relais de grande section transversale se trouvant dans le boîtier pour produire la pression de sortie au raccordement (3) de sortie,
**caractérisé**
**en ce qu'**il est présent dans le boîtier (1) un piston (8) de régulation qui fait partie de la valve (12, 13, 8, 6) de précommande, qui est chargé en pression par le raccordement (2) d'entrée à l'encontre d'une force et qui est couplé avec un élément de commutation d'une valve (12, 13) à coulisse comportant deux positions de commutation,
**en ce que** la valve (12, 13) à coulisse fait communiquer, en l'une de ces positions de commutation s'établissant en cas de charge prépondérante du piston (8) de régulation par la pression dans le raccordement (2) d'entrée, avec le raccordement (2) d'entrée une chambre (14) d'alimentation pour un piston (17) de commutation se trouvant dans le boîtier (1) et faisant partie de la valve (23, 24, 27, 17) relais, et le fait communiquer avec l'atmosphère en son autre position de commutation, avec blocage du raccordement (2) d'entrée,
**en ce que** le piston (17) de commutation commande une double valve (23, 24, 27) qui, en cas de pression atmosphérique dans la chambre (14) d'alimentation, fait communiquer le raccordement (3) de sortie du boîtier (1) avec l'atmosphère et, en cas de chambre (14) d'alimentation alimentée en pression, le fait communiquer avec le raccordement (2) d'entrée, avec blocage de la communication avec l'atmosphère et
**en ce que** la double valve (23, 24, 27) a une section transversale d'écoulement plus grande que la valve (12, 13) à coulisse.

2. Régulateur suivant la revendication 1, **caractérisé en ce que** la valve (12, 13) à coulisse comporte deux positions de commutation avec une course morte entre les deux.

3. Régulateur suivant la revendication 1 ou 2, **caractérisé en ce que** la force à laquelle est soumise le piston (8) de régulation est exercée par un ressort (6) de régulation.

4. Régulateur suivant la revendication 3, **caractérisé en ce que** le piston (8) de régulation et le piston (17) de commutation sont montés suivant le même axe dans le boîtier (1), **en ce que** le ressort (6) de régulation se trouve dans une chambre (24) alimentée en pression atmosphérique ainsi que du côté du piston (8) de régulation éloigné du piston (17) de commutation, **en ce que** la chambre (14) d'alimentation est adjacente au côté du piston (17) de commutation tourné vers le piston (8) de régulation et **en ce que** le piston (17) de commutation est couplé à un deuxième élément de commutation qui forme conjointement avec le premier élément de commutation la valve (12, 13) à coulisse.

5. Régulateur suivant la revendication 4, **caractérisé en ce que** la valve (12, 13) à coulisse est réalisée en valve à coulisse ronde, le piston (17) de commutation étant couplé du côté du piston (8) de régulation à un tube (12) de valve qui passe dans la chambre (14) d'alimentation et qui comporte à l'intérieur de cette chambre (14) d'alimentation un trou (20) transversal communiquant avec son intérieur (16), traversant, en coulissant de manière étanche, une paroi (15) de boîtier séparant la chambre (14) d'alimentation d'une chambre (10) alimentée en la pression dans le raccordement (2) d'entrée et délimitée par le piston (8) de régulation et rentrant dans un trou central du piston (8) de régulation réalisé en piston annulaire, le piston (8) de régulation comportant dans son trou un dispositif d'étanchéité (joint 13 torique d'étanchéité) donnant de l'étanchéité par rapport au tube (12) de valve et le tube (12) de valve comportant dans la région du piston (8) de régulation un deuxième trou (19) transversal qui communique avec son intérieur (16) et qui peut être recouvert par le dispositif d'étanchéité (joint 13 torique d'étanchéité).

6. Régulateur suivant la revendication 5, **caractérisé en ce que** le piston (17) de commutation porte dans une chambre (26) se trouvant du côté éloigné du piston de régulation, communiquant avec le raccordement (3) de sortie, une première partie (23) de valve qui est réalisée en valve à siège et qui est entourée à distance par une deuxième partie (27) de valve fixée au boîtier de la double valve (23, 24, 27), et **en ce qu'**une troisième partie de valve de la double valve (23, 24, 27) du genre annulaire, coopérant avec les deux parties (23, 27) de valve, fait face à ces dernières du côté éloigné du piston de commutation, la partie (24) de valve étant soumise à la force d'un ressort (28) en direction des deux parties (23, 27) de valve citées en premier et se trouvant sur un élément (25) tubulaire qui s'étend du côté éloigné du piston de commutation, qui se trouve dans une chambre (28) communiquant avec le raccordement d'entrée, qui coulisse de manière étanche par rapport au boîtier (1), qui a le même axe que le piston (17) de commutation, dont l'intérieur (31) est en communication avec l'atmosphère et dont le diamètre du dispositif d'étanchéité par rapport au boîtier (1) correspond à peu près au diamètre de la première partie (23) de valve.

7. Régulateur suivant la revendication 6, **caractérisé en ce que** la première et la deuxième partie (23, 27) de valve sont réalisées en siège de valve et **en ce que** la troisième partie (24) de valve est réalisée en dispositif d'étanchéité de double valve.

8. Régulateur suivant la revendication 4, 5 ou 6, **caractérisé en ce que** le piston (17) de commutation est soumis à la force d'un ressort (18) du côté éloigné de la chambre d'alimentation.
